# EUROPEAN PATENT APPLICATION

(11) **EP 4 224 568 A1**
(43) Date of publication of application: **09.08.2023**
(21) Application number: 21875819.1
(22) Date of filing: 30.09.2021
(51) Int. Cl.: H01M 4/139, H01M 4/62

(54) **BINDER PRODUCT FOR SECONDARY BATTERIES**

(30) Priority: 30.09.2020 JP 2020166564
(71) Applicant: Zeon Corporation, Tokyo 100-8246 (JP)
(72) Inventor: SHINTANI, Akihiro, Tokyo 100-8246 (JP)
(74) Representative: Maiwald GmbH
(86) International application number: PCT/JP2021/036291
(87) International publication number: WO 2022/071523

(57) **Abstract**

Provided is a binder product for a secondary battery that has a low tendency for aggregation to occur in a binder composition and enables formation of a functional layer having excellent adhesiveness using the binder composition even after long-term storage. The binder product includes a container having an accommodating part and a binder composition accommodated in an internal space of the accommodating part. An inner wall surface of the accommodating part has a contact angle with water of 80° or more. The binder composition contains a binder, a defoamer, and water and has a content of the defoamer of not less than 0.02 parts by mass and not more than 0.3 parts by mass per 100 parts by mass of the binder. The binder composition has a surface tension of not less than 20 mN/m and not more than 60 mN/m.

## Description

### TECHNICAL FIELD

The present disclosure relates to a binder product that accommodates a binder composition for a secondary battery in a container.

### BACKGROUND

Secondary batteries such as lithium ion secondary batteries have characteristics such as compact size, light weight, high energy-density, and the ability to be repeatedly charged and discharged, and are used in a wide range of applications. A secondary battery generally includes battery members such as electrodes (positive electrode and negative electrode) and a separator that isolates the positive electrode and the negative electrode from each other.

A battery member of a secondary battery may be a member that includes a functional layer containing a binder (binding material) and optionally containing particles compounded so as to cause the battery member to display a desired function (hereinafter, referred to as "functional particles").

Specifically, a separator that includes an adhesive layer containing a binder and/or a porous membrane layer containing a binder and non-conductive particles as functional particles on a separator substrate may be used as a separator of a secondary battery. Moreover, an electrode that includes an electrode mixed material layer containing a binder and electrode active material particles as functional particles on a current collector or an electrode that further includes an adhesive layer and/or porous membrane layer such as described above on an electrode substrate including an electrode mixed material layer on a current collector may be used as an electrode of a secondary battery.

A binder used to form a battery member is conventionally stored in a container in the form of a binder composition having the binder dissolved or dispersed in a solvent such as water (for example, refer to Patent Literature (PTL) 1 and 2).

### CITATION LIST

### Patent Literature

PTL 1: WO2015/029835A1
PTL 2: JP2017-220326A

### SUMMARY

### (Technical Problem)

It is desirable for a functional layer to display excellent adhesiveness in order that the functional layer displays good close adherence to a substrate that supports the functional layer. For example, a technique of reducing the surface tension of a binder composition and increasing the affinity thereof with electrode active material particles or a current collector may be considered in order to cause an electrode mixed material layer serving as a functional layer to display good close adherence to a current collector serving as a substrate.

However, according to studies conducted by the inventor, in a situation in which a binder composition having a low surface tension (for example, a surface tension of 60 mN/m or less) is loaded into a container and is stored for a long time in the form of a binder product, a problem of formation of binder aggregates in the binder composition occurs. The formation of a large amount of such aggregates results in uneven distribution of the binder in an obtained functional layer and loss of adhesiveness of the functional layer.

Accordingly, an object of the present disclosure is to provide a binder product for a secondary battery that has a low tendency for aggregation to occur in a binder composition and enables formation of a functional layer having excellent adhesiveness using the binder composition even after long-term storage.

### (Solution to Problem)

The inventor conducted diligent investigation with the aim of solving the problem set forth above. The inventor discovered that by loading a specific binder composition into a container having an accommodating part with an inner wall surface that has a contact angle with water of not less than a specific value, it is possible to inhibit formation of aggregates in the binder composition after long-term storage and to form a functional layer having excellent adhesiveness even in a situation in which the binder composition is used after long-term storage. In this manner, the inventor completed the present disclosure.

Specifically, the present disclosure aims to advantageously solve the problem set forth above, and a presently disclosed binder product for a secondary battery comprises: a container having an accommodating part; and a binder composition accommodated in an internal space of the accommodating part, wherein an inner wall surface of the accommodating part has a contact angle with water of 80° or more, the binder composition contains a binder, a defoamer, and water and has a content of the defoamer of not less than 0.02 parts by mass and not more than 0.3 parts by mass per 100 parts by mass of the binder, and the binder composition has a surface tension of not less than 20 mN/m and not more than 60 mN/m. The binder product set forth above has a low tendency for aggregates to form in the binder composition inside the container even upon long-term storage. Moreover, by using the binder composition accommodated in the binder product set forth above, it is possible to form a functional layer having excellent adhesiveness.

Note that the "contact angle with water" and "surface tension" referred to in the present disclosure can be measured by methods described in the EXAMPLES section.

In the presently disclosed binder product for a secondary battery, it is preferable that the binder includes either or both of an amide group and a hydroxyalkyl group. When the binder is a polymer including an amide group and/or a hydroxyalkyl group, formation of aggregates in the binder composition after long-term storage can be further inhibited while also further improving adhesiveness of an obtained functional layer.

In the presently disclosed binder product for a secondary battery, it is preferable that the binder includes either or both of an amide group-containing monomer unit and a hydroxyalkyl group-containing monomer unit, and a total of proportional content of the amide group-containing monomer unit and proportional content of the hydroxyalkyl group-containing monomer unit in the binder is not less than 0.05 mass% and not more than 5 mass%. When the binder is a polymer including an amide group and/or a hydroxyalkyl group, formation of aggregates in the binder composition after long-term storage can be further inhibited while also further improving adhesiveness of an obtained functional layer.

Note that when a polymer such as a binder is said to "include a monomer unit" in the present disclosure, this means that "a polymer obtained using that monomer includes a repeating unit derived from the monomer".

Also note that the proportional content of each monomer unit in a polymer such as a binder referred to in the present disclosure can be measured by a nuclear magnetic resonance (NMR) method such as ¹H-NMR or ¹³C-NMR.

In the presently disclosed binder product for a secondary battery, it is preferable that the binder composition further contains a preservative and has a content of the preservative of not less than 0.01 parts by mass and not more than 0.5 parts by mass per 100 parts by mass of the binder. When the binder composition contains a preservative in an amount that is within the range set forth above, formation of aggregates in the binder composition after long-term storage can be further inhibited while also further improving adhesiveness of an obtained functional layer.

In the presently disclosed binder product for a secondary battery, it is preferable that, relative to internal capacity of the container, a capacity ratio of a vacant part determined by subtracting capacity occupied by the binder composition in the container from the internal capacity of the container is 10 volume% or less. When the capacity ratio of the vacant part relative to the internal capacity of the container (hereinafter, referred to as the "vacant fraction") is not more than the value set forth above, formation of aggregates in the binder composition after long-term storage can be further inhibited while also further improving adhesiveness of an obtained functional layer.

In the presently disclosed binder product for a secondary battery, it is preferable that the binder composition has a solid content concentration of not less than 30 mass% and not more than 60 mass%. When the solid content concentration of the binder composition is within the range set forth above, formation of aggregates in the binder composition after long-term storage can be further inhibited while also further improving adhesiveness of an obtained functional layer.

In the presently disclosed binder product for a secondary battery, it is preferable that the defoamer includes a mineral oil-based defoamer. When a mineral oil-based defoamer is used as the defoamer, formation of aggregates in the binder composition after long-term storage can be further inhibited while also further improving adhesiveness of an obtained functional layer.

### (Advantageous Effect)

The presently disclosed binder product for a secondary battery has a low tendency for aggregation to occur in a binder composition and enables formation of a functional layer having excellent adhesiveness using the binder composition even after long-term storage.

### BRIEF DESCRIPTION OF THE DRAWING

In the accompanying drawing,

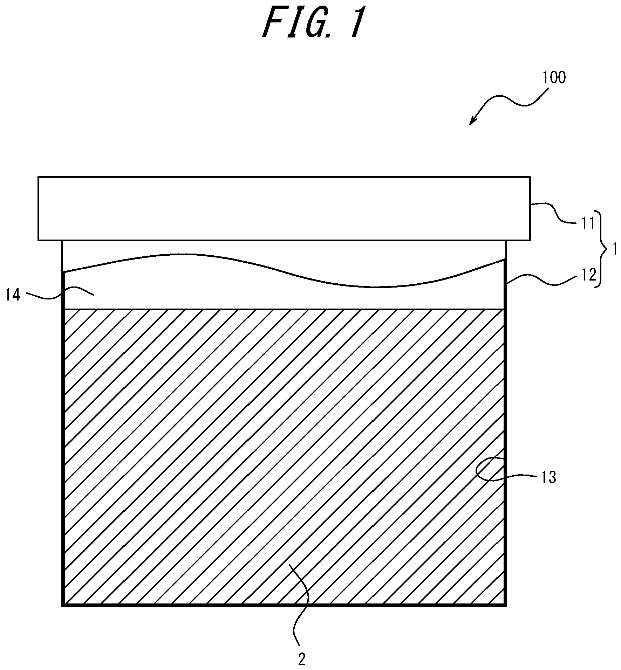

FIG. 1 schematically illustrates one example of structure of the presently disclosed binder product for a secondary battery.

### DETAILED DESCRIPTION

The following describes the presently disclosed binder product for a secondary battery.

The presently disclosed binder product accommodates a binder composition inside a container in order to perform storage, transport, or the like of the binder composition. The binder composition that is accommodated in the presently disclosed binder product can be withdrawn and then used to produce a slurry composition for a functional layer (for example, a slurry composition for an electrode, a slurry composition for an adhesive layer, or a slurry composition for a porous membrane layer) through addition of functional particles, etc., as necessary. Such a slurry composition for a functional layer can be used to form a functional layer (for example, an electrode mixed material layer, an adhesive layer, or a porous membrane layer) of a secondary battery.

The presently disclosed binder product has a low tendency for aggregates to form in the binder composition and enables formation of a functional layer having excellent adhesiveness using the binder composition even after long-term storage as a result of the container having an accommodating part with an inner wall surface that has a contact angle with water of 80° or more, the binder composition that is loaded into an internal space of the accommodating part having a surface tension of not less than 20 mN/m and not more than 60 mN/m, and the binder composition containing a defoamer in an amount of not less than 0.02 parts by mass and not more than 0.3 parts by mass per 100 parts by mass of the binder.

### (Container)

The container includes at least an accommodating part that can accommodate a binder composition. Although the container may be composed of just the accommodating part, it is preferable that the container includes the accommodating part and a cap that can seal an opening of the accommodating part so as to hermetically seal the internal space of the accommodating part from a viewpoint of facilitating loading and withdrawal of the binder composition.

The container can have any shape such as a circular tube shape, a prismatic shape, or a bag shape without any specific limitations.

One example of the shape of the container is described using FIG. 1. In FIG. 1, a binder product for a secondary battery 100 includes a container 1 and a binder composition 2 accommodated inside the container. The container 1 illustrated in FIG. 1 includes a cap 11 and an accommodating part 12. An internal space 14 of the container 1 is defined by an inner wall surface 13 of the accommodating part 12 and the cap 11, and an opening of the accommodating part 12 is sealed by the cap 11. Removal of the cap 11 from the accommodating part 12 makes it possible to withdraw the binder composition 2 through the opening of the accommodating part 12.

### <Contact angle with water>

In the accommodating part of the container, the contact angle with water of the inner wall surface is required to be 80° or more as previously described, and is preferably 100° or more, and more preferably 110° or more. In a situation in which the contact angle with water of the inner wall surface of the accommodating part is less than 80°, formation of aggregates in the binder composition after long-term storage cannot be sufficiently inhibited. This is presumed to be because the affinity of the inner wall surface with the binder composition containing water becomes excessively high, and formation of aggregates is promoted by contact between the inner wall surface and the binder composition. The upper limit for the contact angle with water of the inner wall surface of the accommodating part is not specifically limited and may be 160° or less, for example.

The contact angle with water of the inner wall surface of the accommodating part can be reduced by changing the material of the accommodating part or performing hydrophobization treatment of the inner wall surface of the accommodating part.

### <Material>

The material of the container (i.e., the material of the accommodating part and/or the optionally used cap) is not specifically limited and may be glass, resin, or metal, for example. Of these materials, a resin is preferable, polyethylene, polypropylene, or polycarbonate is more preferable, and polyethylene is even more preferable. In other words, the container is preferably made of a resin, more preferably made of polyethylene, polypropylene, or polycarbonate, and even more preferably made of polyethylene.

Note that the material of the container may be one type of material used individually or two or more types of materials used in combination. For example, an accommodating part made of glass that has a resin layer provided at the surface thereof (particularly at an inner wall surface) can be used as the accommodating part of the container.

### <Hydrophobization treatment>

Examples of hydrophobization treatments that can be used in order to adjust the contact angle with water of the inner wall surface of the accommodating part to not less than the specific value set forth above include treatment through a silane coupling agent, treatment through a titanium coupling agent, treatment through an aluminum coupling agent, treatment through a fatty acid ester wax, treatment through a fatty acid ester wax, and treatment through a fluororesin. One of these treatments may be used individually, or two or more of these treatments may be used in combination. Of these treatments, treatment through a silane coupling agent and treatment through a fluororesin are preferable from a viewpoint of sufficiently increasing the contact angle with water of the inner wall surface of the accommodating part. In other words, the inner wall surface of the accommodating part is preferably coated by either or both of a layer (coating) formed of a silane coupling agent and a layer (coating) formed of a fluororesin.

### <<Treatment through silane coupling agent>>

Examples of silane coupling agents include, but are not specifically limited to, sulfur-containing silane coupling agents such as γ-mercaptopropyltrimethoxysilane, γ-mercaptomethyltrimethoxysilane, γ-mercaptomethyltriethoxysilane, γ-mercaptohexamethyldisilazane, bis(3-triethoxysilylpropyl)tetrasulfane, and bis(3-triethoxysilylpropyl)disulfane; epoxy group-containing silane coupling agents such as γ-glycidoxypropyltrimethoxysilane, γ-glycidoxypropylmethyldimethoxysilane (3-glycidoxypropylmethyldimethoxysilane), β-(3,4-epoxycyclohexyl)ethyltrimethoxysilane, and γ-glycidoxypropylmethyldiethoxysilane (3-glycidoxypropylmethyldiethoxysilane); amino group-containing silane coupling agents such as N-(β-aminoethyl)-γ-aminopropyltrimethoxysilane, 3-aminopropyltrimethoxysilane (γ-aminopropyltrimethoxysilane), γ-aminopropyltriethoxysilane, N-(2-aminoethyl)-3-aminopropyltriethoxysilane, 3-triethoxysilyl-N-(1,3-dimethyl-butylidene)propylamine, and N-phenyl-3-aminopropyltrimethoxysilane; (meth)acryloxy group-containing silane coupling agents such as γ-methacryloxypropyltrimethoxysilane, γ-methacryloxypropyltris(β-methoxyethoxy)silane, γ-methacryloxypropylmethyldimethoxysilane, γ-methacryloxypropylmethyldiethoxysilane, γ-methacryloxypropyltriethoxysilane, and γ-acryloxypropyltrimethoxysilane; vinyl group-containing silane coupling agents such as vinyltrimethoxysilane, vinyl triethoxysilane, vinyltris(β-methoxyethoxy)silane, vinyltrichlorosilane, and vinyltriacetoxysilane; chloropropyl group-containing silane coupling agents such as 3-chloropropyltrimethoxysilane; isocyanate group-containing silane coupling agents such as 3-isocyanatopropyltriethoxysilane; styryl group-containing silane coupling agents such as p-styryltrimethoxysilane; ureido group-containing silane coupling agents such as 3-ureidopropyltriethoxysilane; allyl group-containing silane coupling agents such as diallyldimethylsilane; alkoxy group-containing silane coupling agents such as tetraethoxysilane; phenyl group-containing silane coupling agents such as diphenyldimethoxysilane; fluoro group-containing silane coupling agents such as trifluoropropyltrimethoxysilane; and alkyl group-containing silane coupling agents such as isobutyltrimethoxysilane and cyclohexylmethyldimethoxysilane. One of these silane coupling agents may be used individually, or two or more of these silane coupling agents may be used in combination. Of these silane coupling agents, epoxy group-containing silane coupling agents are preferable from a viewpoint of further inhibiting formation of aggregates in the binder composition after long-term storage while also further improving adhesiveness of an obtained functional layer, and 3-glycidoxypropylmethyldimethoxysilane is more preferable.

Note that the treatment through a silane coupling agent can be performed by a known method without any specific limitations so long as it is possible to form a layer formed of a silane coupling agent at the inner wall surface of the accommodating part. For example, a layer formed of a silane coupling agent can be formed at the inner wall surface of the accommodating part by dissolving a silane coupling agent in a solvent such as water or cyclohexane, applying the resultant solution onto the inner wall surface of the accommodating part, and subsequently performing drying to remove the solvent.

### <<Treatment through fluororesin>>

Examples of fluororesins include, but are not specifically limited to, polytetrafluoroethylene, tetrafluoroethylene-perfluoroalkyl vinyl ether copolymer, tetrafluoroethylene-hexafluoropropylene copolymer, tetrafluoroethylene-ethylene copolymer, polyvinylidene fluoride, polychlorotrifluoroethylene, ethylene-chlorofluoroethylene copolymer, tetrafluoroethylene-perfluorodioxole copolymer, polyvinyl fluoride, tetrafluoroethylene-propylene copolymer, vinylidene fluoride-hexafluoropropylene copolymer, vinylidene fluoride-tetrafluoroethylene-hexafluoropropylene copolymer, acrylic-modified polytetrafluoroethylene, ester-modified polytetrafluoroethylene, epoxy-modified polytetrafluoroethylene, silane-modified polytetrafluoroethylene, and perfluoropolyether group-containing compounds. One of these fluororesins may be used individually, or two or more of these fluororesins may be used in combination. Of these fluororesins, perfluoropolyether group-containing compounds are preferable.

Note that the treatment through a fluororesin can be performed by a known method without any specific limitations so long as it is possible to form a layer formed of a fluororesin at the inner wall surface of the accommodating part. For example, a layer formed of a fluororesin can be formed at the inner wall surface of the accommodating part by dissolving a fluororesin in a solvent such as water or cyclohexane, applying the resultant solution onto the inner wall surface of the accommodating part, and subsequently performing drying to remove the solvent.

### (Binder composition)

The binder composition that is accommodated in the accommodating part of the container described above has a surface tension of not less than 20 mN/m and not more than 60 mN/m. Moreover, the binder composition contains at least a binder, a defoamer, and water and may optionally contain one or more selected from the group consisting of a preservative, an emulsifier, a wetting agent, and other components.

### <Surface tension>

The surface tension of the binder composition is required to be not less than 20 mN/m and not more than 60 mN/m as previously described, is preferably 30 mN/m or more, and is preferably 50 mN/m or less, and more preferably 40 mN/m or less. In a situation in which the surface tension of the binder composition is less than 20 mN/m, adhesiveness of a functional layer decreases. Although the reason for this is not clear, it is presumed that in a situation in which the surface tension of the binder composition is less than 20 mN/m, the binder becomes more easily attached to the inner wall surface of the container in a vacant part of the container, a coating formed through drying of this attached binder falls into the binder composition, and this coating acts as a starting point for reduction of stability of a slurry composition. On the other hand, adhesiveness of a functional layer decreases in a situation in which the surface tension of the binder composition is more than 60 mN/m, which is presumed to be due to reduction of affinity with electrode active material particles or a current collector. In addition, reduction of affinity with functional particles such as electrode active material particles causes loss of viscosity stability of a slurry composition that is produced using the binder composition.

Note that the surface tension of the binder composition can be controlled by altering the types and amounts of the binder, the defoamer, and the optionally used emulsifier and wetting agent, for example.

### <Binder>

The binder may be any polymer that can be used as a binder without any specific limitations so long as it has binding capacity. For example, polyethylene, polypropylene, an acid-modified polyolefin, a vinyl fluoride polymer, a hydroxy group-containing olefinic polymer, an acrylic acid polymer, an acrylic polymer, an acrylonitrile polymer, a diene polymer, a silicon-containing polymer, or the like can be used. One of these binders may be used individually, or two or more of these binders may be used in combination. Of these binders, a diene polymer is preferable in a case in which the binder composition is to be used to form a negative electrode mixed material layer, for example.

The binder preferably includes either or both of an amide group and a hydroxyalkyl group. Studies conducted by the inventor and others have demonstrated that although a binder including an amide group and/or a hydroxyalkyl group has excellent binding capacity, such a binder suffers from a problem that foaming readily occurs during storage or transport and that contact area between a binder composition and an inner wall surface of an accommodating part increases, thereby promoting formation of aggregates.

However, the presently disclosed binder product makes it possible to sufficiently inhibit formation of aggregates in the binder composition after long-term storage even in a case in which a polymer including an amide group and/or a hydroxyalkyl group is used as the binder because the contact angle with water of the inner wall surface of the accommodating part is not less than a specific value and the binder composition contains a specific amount of a defoamer.

Accordingly, when the used binder includes an amide group and/or a hydroxyalkyl group, formation of aggregates in the binder composition after long-term storage can be sufficiently inhibited while also further improving adhesiveness of an obtained functional layer.

Although no specific limitations are placed on the method by which an amide group and/or a hydroxyalkyl group is introduced into the binder, a method in which the binder is produced as a polymer using an amide group-containing monomer and/or a hydroxyalkyl group-containing monomer is preferable.

In other words, the binder preferably includes either or both of an amide group-containing monomer unit and a hydroxyalkyl group-containing monomer unit.

Note that the hydroxyalkyl group may be a hydroxymethyl group, a hydroxyethyl group, or a hydroxypropyl group, for example, and is preferably a hydroxyethyl group.

### <<Amide group-containing monomer unit>>

Examples of amide group-containing monomers that can form an amide group-containing monomer unit include acrylamide, methacrylamide, dimethylacrylamide, diethylacrylamide, and diacetone acrylamide. One of these amide group-containing monomers may be used individually, or two or more of these amide group-containing monomers may be used in combination. Of these amide group-containing monomers, acrylamide is preferable.

### «Hydroxyalkyl group-containing monomer unit»

Examples of hydroxyalkyl group-containing monomers that can form a hydroxyalkyl group-containing monomer unit include hydroxymethyl acrylamide, hydroxyethyl acrylamide, hydroxypropyl acrylamide, hydroxymethyl methacrylamide, hydroxyethyl methacrylamide, hydroxypropyl methacrylamide, hydroxymethyl acrylate, hydroxyethyl acrylate, hydroxypropyl acrylate, hydroxybutyl acrylate, hydroxymethyl methacrylate, hydroxyethyl methacrylate, hydroxypropyl methacrylate, and hydroxybutyl methacrylate. One of these hydroxyalkyl group-containing monomers may be used individually, or two or more of these hydroxyalkyl group-containing monomers may be used in combination. Of these hydroxyalkyl group-containing monomers, hydroxyethyl acrylate is preferable.

Note that in the present disclosure, a monomer including both a hydroxyalkyl group and an amide group is considered to be included among hydroxyalkyl group-containing monomers and not included among amide group-containing monomers.

### «Proportional content»

The total of proportional content of amide group-containing monomer units and proportional content of hydroxyalkyl group-containing monomer units in the binder when all monomer units included in the binder are taken to be 100 mass% is preferably 0.05 mass% or more, and is preferably 5 mass% or less, more preferably 3 mass% or less, and even more preferably 2 mass% or less. Adhesiveness of a functional layer can be further improved when the total proportional content of amide group-containing monomer units and hydroxyalkyl group-containing monomer units is 0.05 mass% or more, whereas foaming of the binder composition is suppressed and formation of aggregates in the binder composition after long-term storage can be sufficiently inhibited when the total proportional content of amide group-containing monomer units and hydroxyalkyl group-containing monomer units is 5 mass% or less.

### <<Diene polymer>>

The following describes the chemical composition of a diene polymer that is suitable as the binder. The diene polymer includes an aliphatic conjugated diene monomer unit and preferably includes either or both of an amide group-containing monomer unit and a hydroxyalkyl group-containing monomer unit such as described above. Moreover, the diene polymer can optionally include monomer units other than an aliphatic conjugated diene monomer unit, an amide group-containing monomer unit, and a hydroxyalkyl group-containing monomer unit (i.e., other monomer units).

### [Aliphatic conjugated diene monomer unit]

Examples of aliphatic conjugated diene monomers that can form an aliphatic conjugated diene monomer unit include 1,3-butadiene, 2-methyl-1,3-butadiene (isoprene), and 2,3-dimethyl-1,3-butadiene. One of these aliphatic conjugated diene monomers may be used individually, or two or more of these aliphatic conjugated diene monomers may be used in combination. Of these aliphatic conjugated diene monomers, 1,3-butadiene is preferable.

The proportional content of aliphatic conjugated diene monomer units in the binder when all monomer units included in the binder are taken to be 100 mass% is preferably 25 mass% or more, and more preferably 30 mass% or more, and is preferably 60 mass% or less, and more preferably 50 mass% or less.

### [Other monomer units]

Examples of other monomer units include monomer units that are derived from known monomers that can be copolymerized with an aliphatic conjugated diene monomer, an amide group-containing monomer, and a hydroxyalkyl group-containing monomer such as described above. Examples of such monomers include aromatic vinyl monomers, nitrile group-containing monomers, (meth)acrylic acid ester monomers, and carboxy group-containing monomers. One of these monomers may be used individually, or two or more of these monomers may be used in combination. Of these monomers, aromatic vinyl monomers, (meth)acrylic acid ester monomers, and carboxy group-containing monomers are preferable, aromatic vinyl monomers and carboxy group-containing monomers are more preferable, and aromatic vinyl monomers are even more preferable. In other words, the diene polymer is particularly preferably an aliphatic conjugated diene-aromatic vinyl copolymer that includes an aliphatic conjugated diene monomer unit and an aromatic vinyl monomer unit.

Note that in the present disclosure, "(meth)acryl" is used to indicate "acryl" and/or "methacryl".

Examples of aromatic vinyl monomers that can form an aromatic vinyl monomer unit include styrene, α-methylstyrene, vinyltoluene, and divinylbenzene. One of these aromatic vinyl monomers may be used individually, or two or more of these aromatic vinyl monomers may be used in combination. Of these aromatic vinyl monomers, styrene is preferable.

The proportional content of aromatic vinyl monomer units in the binder when all monomer units included in the binder are taken to be 100 mass% is preferably 5 mass% or more, and more preferably 10 mass% or more, and is preferably 80 mass% or less, and more preferably 70 mass% or less.

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, and 2-ethylhexyl acrylate; methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, and 2-ethylhexyl methacrylate; and hydroxy group-containing (meth)acrylic acid esters such as 2-hydroxyethyl acrylate, 2-hydroxy methacrylate, 2-hydroxypropyl acrylate, 2-hydroxypropyl methacrylate, hydroxybutyl acrylate, hydroxybutyl methacrylate, and 3-chloro-2-hydroxypropyl methacrylate. One of these (meth)acrylic acid ester monomers may be used individually, or two or more of these (meth)acrylic acid ester monomers may be used in combination. Of these (meth)acrylic acid ester monomers, hydroxy group-containing (meth)acrylic acid esters are preferable, and 2-hydroxyethyl acrylate is more preferable.

The proportional content of (meth)acrylic acid ester monomer units in the binder when all monomer units included in the binder are taken to be 100 mass% is preferably 0.3 mass% or more, more preferably 0.5 mass% or more, and even more preferably 0.6 mass% or more, and is preferably 2 mass% or less, and more preferably 1.5 mass% or less.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

One of these carboxy group-containing monomers may be used individually, or two or more of these carboxy group-containing monomers may be used in combination. Of these carboxy group-containing monomers, dicarboxylic acids, derivatives of dicarboxylic acids, and acid anhydrides thereof are preferable, and itaconic acid is more preferable.

The proportional content of carboxy group-containing monomer units in the binder when all monomer units included in the binder are taken to be 100 mass% is preferably 2 mass% or more, and more preferably 3 mass% or more, and is preferably 8 mass% or less, more preferably 6 mass% or less, and even more preferably 4 mass% or less.

### <<Production method of binder>>

The method by which the binder is produced is not specifically limited and may be a method in which a monomer composition containing the above-described monomers is polymerized by a known method.

The proportion constituted by each monomer in the monomer composition is normally the same as the proportion constituted by each monomer unit in the target binder. The polymerization method of the binder is not specifically limited, and any of solution polymerization, suspension polymerization, bulk polymerization, emulsion polymerization, and the like may be adopted, for example. Moreover, the polymerization reaction may be addition polymerization such as ionic polymerization, radical polymerization, or living radical polymerization. An emulsifier, dispersant, polymerization initiator, polymerization aid, or the like used in polymerization may be the same as typically used and the amount thereof may also be the same as typically used. Moreover, seed particles may be used to perform seeded polymerization in the polymerization. Note that a binder produced by suspension polymerization or emulsion polymerization that is dispersed in an aqueous solvent is preferable in terms of having excellent handleability during transport and storage.

### <Defoamer>

The binder composition is required to contain a defoamer. As a result of a defoamer being included in the binder composition, foaming of the binder composition in the accommodating part of the container during long-term storage can be suppressed, and formation of aggregates due to contact with the inner wall surface of the accommodating part can be inhibited.

The defoamer may be a silicone-based defoamer, a mineral oil-based defoamer (modified hydrocarbon oil having mineral oil as a base), or a polymer-based defoamer. One defoamer may be used individually, or two or more defoamers may be used in combination. The use of a mineral oil-based defoamer as the defoamer is preferable from a viewpoint of further inhibiting formation of aggregates in the binder composition after long-term storage while also further improving adhesiveness of a functional layer.

Note that the defoamer may be a commonly known defoamer and may be selected from various types of defoamers that are commercially available. For example, DF6351 (produced by Seiko PMC Corporation) can preferably be used as a mineral oil-based defoamer.

### <<Content>>

The amount of the defoamer that is included in the binder composition is required to be not less than 0.02 parts by mass and not more than 0.3 parts by mass per 100 parts by mass of the binder, and is preferably 0.1 parts by mass or less, and more preferably 0.06 parts by mass or less per 100 parts by mass of the binder. In a situation in which the content of the defoamer is less than 0.02 parts by mass per 100 parts by mass of the binder, formation of aggregates in the binder composition after long-term storage cannot be sufficiently inhibited, and adhesiveness of a functional layer decreases. On the other hand, adhesiveness of a functional layer also decreases in a situation in which the content of the defoamer is more than 0.3 parts by mass per 100 parts by mass of the binder, which is presumed to be because adhesion through the binder is impaired by the presence of the defoamer at a binding interface between electrode active material particles or between electrode active material particles and a current collector.

### <Preservative>

The binder composition preferably contains a preservative. The inclusion of a preservative in the binder composition can suppress bacterial growth and further inhibit formation of aggregates. A preservative can display an effect of bacterial growth suppression particularly well with respect to a binder produced by suspension polymerization or emulsion polymerization that is dispersed in an aqueous solvent.

The preservative may be a known preservative such as an isothiazoline compound or 2-bromo-2-nitro-1,3-propanediol, for example. Examples of isothiazoline compounds that may be used include, but are not specifically limited to, those described in JP2013-211246A, JP2005-097474A, JP2013-206624A, and so forth. Note that one preservative may be used individually, or two or more preservatives may be used in combination. The preservative is preferably 1,2-benzisothiazolin-3-one, 2-methyl-4-isothiazolin-3-one, 5-chloro-2-methyl-4-isothiazolin-3-one, or 2-bromo-2-nitro-1,3-propanediol, and more preferably 1,2-benzisothiazolin-3-one.

The amount of the preservative that is included in the binder composition is preferably 0.01 parts by mass or more per 100 parts by mass of the binder, and is preferably 0.5 parts by mass or less, more preferably 0.4 parts by mass or less, and even more preferably 0.3 parts by mass or less per 100 parts by mass of the binder. Formation of aggregates in the binder composition after long-term storage can be further inhibited when the content of the preservative is 0.01 parts by mass or more per 100 parts by mass of the binder, whereas adhesiveness of a functional layer can be sufficiently improved when the content of the preservative is 0.5 parts by mass or less per 100 parts by mass of the binder.

### <Emulsifier>

The binder composition preferably contains an emulsifier. The inclusion of an emulsifier in the binder composition enables control of the surface tension of the binder composition to an appropriate value, and, as a result, enables good inhibition of formation of aggregates in the binder composition after long-term storage while enabling sufficient improvement of adhesiveness of a functional layer.

The emulsifier may be a non-ionic emulsifier such as a polyoxyethylene alkyl ether, a polyoxyethylene alkyl phenol ether, a polyoxyethylene alkyl ester, or a polyoxyethylene sorbitan alkyl ester; an anionic emulsifier such as an alkylbenzene sulfonic acid salt (for example, potassium dodecylbenzenesulfonate or sodium dodecylbenzenesulfonate), a higher alcohol sulfuric acid ester salt, an alkyl sulfosuccinic acid salt, a β-naphthalene sulfonic acid formaldehyde condensate sodium salt, a dodecyl diphenyl oxide disulfonic acid salt (for example, sodium dodecyl diphenyl oxide disulfonate), or a lauryl sulfuric acid salt (for example, sodium lauryl sulfate); a cationic emulsifier such as an alkyl trimethyl ammonium chloride, a dialkyl ammonium chloride, or benzyl ammonium chloride; a copolymerizable emulsifier such as a sulfo ester of an α,β-unsaturated carboxylic acid, a sulfate ester of an α,β-unsaturated carboxylic acid, or a sulfoalkyl aryl ether; or the like.

One emulsifier may be used individually, or two or more emulsifiers may be used in combination. The emulsifier is preferably an anionic emulsifier from a viewpoint of further inhibiting formation of aggregates in the binder composition after long-term storage while also further improving adhesiveness of a functional layer, is more preferably an alkylbenzene sulfonic acid salt, a β-naphthalene sulfonic acid formaldehyde condensate sodium salt, a dodecyl diphenyl oxide disulfonic acid salt, or a lauryl sulfuric acid salt, and is even more preferably potassium dodecylbenzenesulfonate, sodium dodecylbenzenesulfonate, β-naphthalene sulfonic acid formaldehyde condensate sodium salt, sodium dodecyl diphenyl oxide disulfonate, or sodium lauryl sulfate.

The amount of the emulsifier that is included in the binder composition is preferably 0.4 parts by mass or more per 100 parts by mass of the binder, and is preferably 5 parts by mass or less, and more preferably 2 parts by mass or less per 100 parts by mass of the binder. When the content of the emulsifier is 0.4 parts by mass or more per 100 parts by mass of the binder, adhesiveness of a functional layer can be further improved while also increasing viscosity stability of a slurry composition that is produced using the binder composition. In addition, viscosity stability of the binder composition can be improved. On the other hand, when the content of the emulsifier is 5 parts by mass or less per 100 parts by mass of the binder, adhesiveness of a functional layer can be sufficiently improved.

### <Solid content concentration>

The solid content concentration of the binder composition is preferably 30 mass% or more, and more preferably 40 mass% or more, and is preferably 60 mass% or less, and more preferably 50 mass% or less. When the solid content concentration of the binder composition is 30 mass% or more, it is possible to inhibit uneven distribution of the binder in a functional layer obtained when a slurry composition produced using the binder composition is dried to form a functional layer and to cause this functional layer to display even better adhesiveness. On the other hand, when the solid content concentration of the binder composition is 60 mass% or less, formation of aggregates after long-term storage can be further inhibited.

### <Production method of binder composition>

The binder composition can be obtained by mixing the components described above in the presence of water.

For example, the binder composition can be produced by adding and mixing the defoamer and the emulsifier, preservative, and/or other components that are used as necessary with an aqueous solution or water dispersion of the binder obtained after a polymerization reaction. Note that the defoamer, emulsifier, and other components may alternatively be components that are contained in the aqueous solution or water dispersion of the binder.

In terms of other components, a wetting agent may be used in order to control surface tension of the binder composition, for example.

### <Production method of binder product>

The presently disclosed binder product is obtained by loading the binder composition described above into the accommodating part of the container described above. The method by which the binder composition is loaded into the accommodating part of the container is not specifically limited, and a known technique can be adopted.

The vacant fraction of the binder product is preferably 10 volume% or less. When the vacant fraction is 10 volume% or less, formation of aggregates in the binder composition after long-term storage can be further inhibited while also further improving adhesiveness of a functional layer.

Note that the binder product obtained as described above is preferably stored in an environment having a temperature of not lower than 5°C and not higher than 40°C. By storing the binder product in a temperature range such as set forth above, formation of aggregates in the binder composition can be sufficiently inhibited while also preventing degradation of the binder. As a result, adhesiveness of an obtained functional layer can be further improved.

### (Application of binder product)

The binder composition that is loaded into the accommodating part of the container in the presently disclosed binder product can be used in formation of a functional layer such as an electrode mixed material layer, for example.

Although the following describes a case in which the binder composition contained in the presently disclosed binder product is used to produce a slurry composition for an electrode and then to form an electrode, the present disclosure is not limited to this case.

### <Slurry composition for electrode>

The slurry composition for an electrode contains electrode active material particles, the binder composition described above, and other components that are used as necessary.

### «Electrode active material particles»

The electrode active material particles may be positive electrode active material particles or may be negative electrode active material particles. The electrode active material particles are a material that gives and receives electrons inside a battery. The following describes a case in which the electrode active material particles are used in a lithium ion secondary battery.

Positive electrode active material particles are particles formed of a compound (positive electrode active material) that can occlude and release lithium ions. Positive electrode active materials are generally classified as positive electrode active materials formed of inorganic compounds and positive electrode active materials formed of organic compounds.

Examples of positive electrode active materials formed of inorganic compounds include transition metal oxides, complex oxides of lithium and a transition metal, and transition metal sulfides. The transition metal may be Fe, Co, Ni, Mn, or the like. Specific examples of inorganic compounds used as positive electrode active materials include lithium-containing complex metal oxides such as LiCoO₂, LiNiO₂, LiMnO₂, LiMn₂O₄, LiFePO₄, and LiFeVO₄; transition metal sulfides such as TiS₂, TiS₃, and amorphous MoS₂; and transition metal oxides such as Cu₂V₂O₃, amorphous V₂O-P₂O₅, MoOs, V₂O₅, and V₆O₁₃. These compounds may have undergone partial element substitution.

Examples of positive electrode active materials formed of organic compounds include polyaniline, polypyrrole, polyacene, disulfide compounds, polysulfide compounds, and N-fluoropyridinium salts. Note that the positive electrode active material may be a mixture of an inorganic compound and an organic compound such as described above.

Also note that one type of positive electrode active material particles may be used individually, or two or more types of positive electrode active material particles may be used in combination.

A negative electrode active material forming negative electrode active material particles may be an allotrope of carbon such as graphite or coke. A negative electrode active material formed of an allotrope of carbon such as described above can be used in a mixed or coated form with a metal, metal salt, oxide, or the like. Other examples of negative electrode active materials that can be used include oxides and sulfates of silicon, tin, zinc, manganese, iron, nickel, and the like, metal lithium, lithium alloys such as Li-Al, Li-Bi-Cd, and Li-Sn-Cd, lithium transition metal nitrides, and silicon.

Note that one type of negative electrode active material particles may be used individually, or two or more types of negative electrode active material particles may be used in combination.

### <<Binder composition>>

The above-described binder composition that contains a binder can be used as the binder composition. From a viewpoint of sufficiently ensuring adhesiveness of an obtained electrode mixed material layer while also reducing internal resistance of a secondary battery, the amount of the binder that is used relative to 100 parts by mass of the electrode active material particles is preferably within a range of not less than 0.1 parts by mass and not more than 50 parts by mass, more preferably within a range of not less than 0.5 parts by mass and not more than 20 parts by mass, and even more preferably within a range of not less than 1 part by mass and not more than 10 parts by mass.

### <<Other components>>

Examples of other components that can be compounded in the slurry composition for an electrode include known components such as conductive materials and thickeners without any specific limitations. Note that one other component may be used individually, or two or more other components may be used in combination.

### <<Production of slurry composition for electrode>>

No specific limitations are placed on the method by which the slurry composition for an electrode is produced.

For example, the slurry composition for an electrode can be produced by mixing the binder composition, the electrode active material particles, and other components that are used as necessary in the presence of a dispersion medium such as water. The method of mixing is not specifically limited, and the mixing can be performed using a typically used stirrer or disperser.

### <Electrode>

The slurry composition for an electrode described above can be used to form an electrode mixed material layer on a current collector and thereby obtain an electrode. Specifically, an electrode mixed material layer can be formed by any of the following methods.
(1) A method in which the slurry composition for an electrode is applied onto the surface of a current collector and is then dried
(2) A method in which a current collector is immersed in the slurry composition for an electrode and is then dried
(3) A method in which the slurry composition for an electrode is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition for an electrode onto a current collector (application step) and a step of drying the slurry composition for an electrode that has been applied onto the current collector so as to form an electrode mixed material layer on the current collector (drying step).

### «Application step»

The method by which the slurry composition for an electrode is applied onto the current collector is not specifically limited and may be a commonly known method. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition for an electrode is applied is a material having electrical conductivity and electrochemical durability. Specifically, the current collector may, for example, be made of iron, copper, aluminum, nickel, stainless steel, titanium, tantalum, gold, platinum, or the like. Note that one of the above-described materials may be used individually, or two or more of the above-described materials may be used in combination.

### <<Drying step>>

The method by which the slurry composition for an electrode on the current collector is dried is not specifically limited and may be a commonly known method. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode that includes the current collector and the electrode mixed material layer.

After the drying step, the electrode mixed material layer may be further subjected to a pressing process, such as mold pressing or roll pressing. This pressing process can further improve adhesiveness of the electrode mixed material layer and further densify the obtained electrode mixed material layer.

The electrode obtained as described above can suitably be used as an electrode of a secondary battery such as a lithium ion secondary battery.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the contact angle with water of an inner wall surface of an accommodating part, the surface tension of a binder composition, the inhibition of formation of aggregates in a binder composition after long-term storage, the viscosity stability of a binder composition, the viscosity stability of a slurry composition for a negative electrode, and the adhesiveness of a negative electrode mixed material layer.

### <Contact angle with water>

A contact angle meter (produced by Kyowa Interface Science Co., Ltd.; product name: DMs-400) was used as a measurement instrument. Water was dripped onto an inner wall surface of an accommodating part, and then the contact angle meter was used to perform image analysis based on the tangent method for an image obtained from a horizontal direction and thereby determine the contact angle.

### <Surface tension>

The surface tension of a binder composition for a secondary battery was measured by the platinum plate method in a 25°C environment using an automatic surface tensiometer (DY-300 produced by Kyowa Interface Science Co., Ltd.).

### inhibition of formation of aggregates>

A produced binder product was set in a constant temperature tank having an adjustable storage temperature and was stored at 60°C for 30 days. The binder product was subjected to an operation of shaking vertically and horizontally at points corresponding to 0 days, 10 days, and 20 days of storage. After 30 days of storage, aggregates in the binder composition were trapped using a 200-mesh stainless steel screen. The trapped aggregates were washed with water and were then dried at 80°C under normal pressure for 1 hour using a dryer so as to cause evaporation of water. The amount (mass%) of aggregates after drying was calculated based on 100 mass% of solid content in the binder composition prior to storage and was then evaluated by the following standard. A smaller amount indicates that formation of aggregates is inhibited.
A: Amount of aggregates is less than 0.05 mass%
B: Amount of aggregates is not less than 0.05 mass% and less than 0.10 mass%
C: Amount of aggregates is 0.10 mass% or more

### <Viscosity stability (binder composition)>

The viscosity of a produced binder composition (pre-storage viscosity) was measured using a B-type viscometer under conditions of 25°C and 60 rpm. Next, a binder product was stored by the same method as described above in "Inhibition of formation of aggregates", and then the viscosity of the binder composition (post-storage viscosity) was measured using a B-type viscometer under the same conditions as described above. A viscosity abnormality was judged to have occurred in a case in which there was a change of more than ±5% relative to the pre-storage viscosity, and an evaluation was made by the following standard.
A: No viscosity abnormality
B: Viscosity abnormality

### <Viscosity stability (slurry composition for negative electrode)>

The viscosity η0 of a produced slurry composition for a negative electrode was measured using a B-type viscometer under conditions of 25°C and 60 rpm. Next, the slurry composition for a negative electrode was left at rest at 25°C for 72 hours, and then the viscosity η1 was measured under the same conditions as for η0. A viscosity change rate defined by a formula Δη = |η1 - η0|/η0 × 100(%) was determined and was evaluated by the following standard. A smaller value for the viscosity change rate Δη indicates that the slurry composition for a negative electrode has better viscosity stability.
A: Viscosity change rate Δη is less than 20%
B: Viscosity change rate Δη is not less than 20% and less than 50%
C: Viscosity change rate Δη is not less than 50% and less than 80%
D: Viscosity change rate Δη is 80% or more

### <Adhesiveness>

Cellophane tape (tape prescribed by JIS Z1522) was affixed to the negative electrode mixed material layer surface of a produced negative electrode, one end of the current collector was pulled and peeled off in a perpendicular direction at a pulling speed of 50 mm/min, and the stress during this peeling was measured (note that the cellophane tape was fixed to a test stage). Three measurements were made in this manner. An average value of these measurements was determined, was taken to be the peel strength, and was evaluated by the following standard. A larger value for the peel strength indicates that the negative electrode mixed material layer has better adhesiveness and strong close adherence to the current collector.
A: Peel strength is 12 N/m or more
B: Peel strength is not less than 8 N/m and less than 12 N/m
C: Peel strength is less than 8 N/m

### (Example 1)

### <Preparation of container>

A container (internal capacity: 20 L) made of polyethylene that included an accommodating body and a cap such as illustrated in FIG. 1 was prepared. The accommodating body had an opening, and an internal space of the accommodating body could be hermetically sealed by screwing on the cap at the opening so as to seal the opening. A silane coupling agent (3-glycidoxypropylmethyldimethoxysilane; produced by Shin-Etsu Chemical Co., Ltd.; product name: KBM-402) dissolved in weakly acidic water (pH = 4 to 6) with a concentration of 2% was applied onto an inner wall surface of the accommodating body in the container made of polyethylene and was dried at 80°C for 1 hour so as to perform hydrophobization treatment and thereby prepare a container for use in production of a binder product. The contact angle with water was measured for the inner wall surface of this accommodating body. The result is shown in Table 1.

### <Preparation of binder composition and binder product>

A 5 MPa pressure-resistant vessel including a stirrer was charged with 30 parts of 1,3-butadiene, 40 parts of styrene, 9 parts of acrylonitrile, 17 parts of methyl methacrylate, 4 parts of methacrylic acid, 0.5 parts of t-dodecyl mercaptan as a molecular weight modifier, 9 parts of sodium dodecylbenzenesulfonate as an emulsifier, 150 parts of deionized water, and 1.0 parts of potassium persulfate as a polymerization initiator. These materials were thoroughly stirred and were then heated to 50°C so as to initiate polymerization and obtain seed particles (particulate diene polymer).

In addition, a 5 MPa pressure-resistant vessel including a stirrer was charged with 4 parts of the seed particles described above, 45 parts of 1,3-butadiene, 14 parts of styrene, 26 parts of acrylonitrile, 12 parts of methyl methacrylate, 1 part of acrylic acid, 1 part of itaconic acid, 1 part of acrylamide, 1 part of t-dodecyl mercaptan and 0.5 parts of α-methylstyrene dimer as molecular weight modifiers, 1 part of sodium dodecyl diphenyl oxide disulfonate and 0.1 parts of β-naphthalene sulfonic acid formaldehyde condensate sodium salt as emulsifiers, 150 parts of deionized water, and 1.0 parts of potassium persulfate as a polymerization initiator. These materials were thoroughly stirred and were then heated to 50°C so as to initiate polymerization. Cooling was performed to quench the reaction at the point at which the polymerization conversion rate reached 96%. The resultant water dispersion containing a diene polymer was adjusted to pH 8 through addition of 5% sodium hydroxide aqueous solution. Thereafter, unreacted monomer was removed by thermal-vacuum distillation. In addition, cooling was subsequently performed to 30°C or lower.

After adding 0.05 parts of a mineral oil-based defoamer (produced by Seiko PMC Corporation; product name: DF6351) as a defoamer and 0.1 parts of an isothiazoline compound (1,2-benzisothiazolin-3-one) as a preservative per 100 parts of binder to the cooled water dispersion containing the diene polymer and filtering the water dispersion through a 200-mesh stainless steel screen, the water dispersion was loaded into the accommodating body of the container so as to obtain a binder product containing a binder composition (18 L). The vacant fraction of this binder product was 10 volume%. Note that the amount of emulsifier contained in the binder composition was 1.4 parts (total of sodium dodecylbenzenesulfonate imported in seed particles and sodium dodecyl diphenyl oxide disulfonate and β-naphthalene sulfonic acid formaldehyde condensate sodium salt used in second stage of polymerization) per 100 parts of the binder. This binder product was used to evaluate inhibition of formation of aggregates in the binder composition after long-term storage and viscosity stability of the binder composition. The results are shown in Table 1.

### <Production of slurry composition for negative electrode>

A planetary mixer equipped with a disper blade was charged with 100 parts of graphite as negative electrode active material particles, 0.2 parts of carbon black (produced by Denka Company Limited; product name: HS-100) as a conductive material, and 1.0 parts in terms of solid content of a 2% aqueous solution of carboxymethyl cellulose (produced by Nippon Paper Industries Co., Ltd.; product name: MAC-500LC) as a water-soluble polymer so as to obtain a mixture. The obtained mixture was adjusted to a solid content concentration of 60% with deionized water and was subsequently mixed at 25°C for 60 minutes. Next, the solid content concentration was adjusted to 53% with deionized water, and a further 10 minutes of mixing was performed at 25°C to yield a mixture. Deionized water and 2.0 parts in terms of solid content of the binder composition contained in the binder product after long-term storage under the same conditions as in evaluation of "Inhibition of formation of aggregates" were added to the obtained mixture, and the final solid content concentration was adjusted to 48%. After a further 10 minutes of mixing, defoaming treatment was performed under reduced pressure to yield a slurry composition for a negative electrode. This slurry composition for a negative electrode was used to evaluate viscosity stability. The result is shown in Table 1.

### <Production of negative electrode>

The slurry composition for a negative electrode was applied onto copper foil of 15 µm in thickness serving as a current collector by a comma coater such as to have a coating weight after drying of 9 mg/cm². The slurry composition for a negative electrode was dried by conveying the copper foil inside a 60°C oven for 2 minutes at a speed of 0.5 m/min. Thereafter, 2 minutes of heat treatment was performed at 120°C to obtain a negative electrode web. The negative electrode web was then rolled by roll pressing to obtain a negative electrode having a negative electrode mixed material layer density of 1.70 g/cm³. This negative electrode was used to evaluate adhesiveness of the negative electrode mixed material layer. The result is shown in Table 1.

### (Example 2)

A binder composition and a binder product were prepared as described below. With the exception of this, a container, a slurry composition for a negative electrode, and a negative electrode were prepared and various evaluations were performed in the same way as in Example 1. The results are shown in Table 1.

### <Preparation of binder composition and binder product>

A 5 MPa pressure-resistant vessel including a stirrer was charged with 60 parts of 1,3-butadiene, 38 parts of styrene, 2 parts of methacrylic acid, 0.2 parts of t-dodecyl mercaptan as a molecular weight modifier, 4 parts of sodium dodecyl diphenyl oxide disulfonate as an emulsifier, 150 parts of deionized water, and 0.5 parts of potassium persulfate as a polymerization initiator. These materials were thoroughly stirred and were then heated to 50°C so as to initiate polymerization and obtain seed particles (particulate diene polymer).

In addition, a 5 MPa pressure-resistant vessel including a stirrer was charged with 6 parts of the seed particles described above, 33 parts of 1,3-butadiene, 62 parts of acrylonitrile, 4 parts of itaconic acid, 1 part of hydroxyethyl acrylate, 0.5 parts of t-dodecyl mercaptan as a molecular weight modifier, 0.5 parts of sodium dodecyl diphenyl oxide disulfonate as an emulsifier, 150 parts of deionized water, and 1.0 parts of potassium persulfate as a polymerization initiator. These materials were thoroughly stirred and were then heated to 50°C so as to initiate polymerization. Cooling was performed to quench the reaction at the point at which the polymerization conversion rate reached 96%. The resultant water dispersion containing a diene polymer was adjusted to pH 8 through addition of 5% sodium hydroxide aqueous solution. Thereafter, unreacted monomer was removed by thermal-vacuum distillation. In addition, cooling was subsequently performed to 30°C or lower.

Subsequent operations were performed in the same way as in Example 1 to obtain a binder composition and a binder product. Note that the amount of emulsifier contained in the binder composition was 0.7 parts (total of sodium dodecyl diphenyl oxide disulfonate imported in seed particles and sodium dodecyl diphenyl oxide disulfonate used in second stage of polymerization) per 100 parts of the binder.

### (Examples 3 and 4)

A container, a binder composition, a binder product, a slurry composition for a negative electrode, and a negative electrode were prepared and various evaluations were performed in the same way as in Example 1 with the exception that in production of the binder composition, the amount of the mineral oil-based defoamer used as a defoamer was changed to 0.3 parts (Example 3) or 0.02 parts (Example 4). The results are shown in Table 1.

### (Example 5)

A binder composition and a binder product were prepared as described below. With the exception of this, a container, a slurry composition for a negative electrode, and a negative electrode were prepared and various evaluations were performed in the same way as in Example 1. The results are shown in Table 1.

### <Preparation of binder composition and binder product>

Seed particles (particulate diene polymer) were obtained in the same way as in Example 1.

In addition, a 5 MPa pressure-resistant vessel including a stirrer was charged with 4 parts of the seed particles described above, 45 parts of 1,3-butadiene, 14 parts of styrene, 26 parts of acrylonitrile, 12 parts of methyl methacrylate, 1 part of acrylic acid, 1 part of itaconic acid, 1 part of acrylamide, 1 part of t-dodecyl mercaptan and 0.5 parts of α-methylstyrene dimer as molecular weight modifiers, 0.2 parts of sodium dodecyl diphenyl oxide disulfonate as an emulsifier, 150 parts of deionized water, and 1.0 parts of potassium persulfate as a polymerization initiator. These materials were thoroughly stirred and were then heated to 50°C so as to initiate polymerization. Cooling was performed to quench the reaction at the point at which the polymerization conversion rate reached 96%. The resultant water dispersion containing a diene polymer was adjusted to pH 8 through addition of 5% sodium hydroxide aqueous solution. Thereafter, unreacted monomer was removed by thermal-vacuum distillation. In addition, cooling was subsequently performed to 30°C or lower.

Subsequent operations were performed in the same way as in Example 1 to obtain a binder composition and a binder product. Note that the amount of emulsifier contained in the binder composition was 0.5 parts (total of sodium dodecylbenzenesulfonate imported in seed particles and sodium dodecyl diphenyl oxide disulfonate used in second stage of polymerization) per 100 parts of the binder.

### (Example 6)

A binder composition and a binder product were prepared as described below. With the exception of this, a container, a slurry composition for a negative electrode, and a negative electrode were prepared and various evaluations were performed in the same way as in Example 1. The results are shown in Table 1.

### <Preparation of binder composition and binder product>

Seed particles (particulate diene polymer) were obtained in the same way as in Example 1.

In addition, a 5 MPa pressure-resistant vessel including a stirrer was charged with 4 parts of the seed particles described above, 45 parts of 1,3-butadiene, 14 parts of styrene, 26 parts of acrylonitrile, 12 parts of methyl methacrylate, 1 part of acrylic acid, 1 part of itaconic acid, 1 part of acrylamide, 1 part of t-dodecyl mercaptan and 0.5 parts of α-methylstyrene dimer as molecular weight modifiers, 4 parts of sodium dodecyl diphenyl oxide disulfonate and 0.8 parts of β-naphthalene sulfonic acid formaldehyde condensate sodium salt as emulsifiers, 150 parts of deionized water, and 1.0 parts of potassium persulfate as a polymerization initiator. These materials were thoroughly stirred and were then heated to 50°C so as to initiate polymerization. Cooling was performed to quench the reaction at the point at which the polymerization conversion rate reached 96%. The resultant water dispersion containing a diene polymer was adjusted to pH 8 through addition of 5% sodium hydroxide aqueous solution. Thereafter, unreacted monomer was removed by thermal-vacuum distillation. In addition, cooling was subsequently performed to 30°C or lower.

Subsequent operations were performed in the same way as in Example 1 to obtain a binder composition and a binder product. Note that the amount of emulsifier contained in the binder composition was 5 parts (total of sodium dodecylbenzenesulfonate imported in seed particles and sodium dodecyl diphenyl oxide disulfonate and β-naphthalene sulfonic acid formaldehyde condensate sodium salt used in second stage of polymerization) per 100 parts of the binder.

### (Example 7)

A binder composition, a binder product, a slurry composition for a negative electrode, and a negative electrode were prepared and various evaluations were performed in the same way as in Example 1 with the exception that a container prepared as described below was used. The results are shown in Table 1.

### <Preparation of container>

A fluororesin (perfluoropolyether group-containing compound; produced by Fluoro Technology; product name: FS-6130) dissolved in water with a concentration of 10% was applied onto an inner wall surface of an accommodating body in a container made of polyethylene that was of the same type as that used in Example 1 and was dried at 80°C for 1 hour so as to perform hydrophobization treatment and thereby prepare a container for use in production of a binder product.

### (Example 8)

A binder composition and a binder product were prepared as described below. With the exception of this, a container, a slurry composition for a negative electrode, and a negative electrode were prepared and various evaluations were performed in the same way as in Example 1. The results are shown in Table 1.

### <Preparation of binder composition and binder product>

A 5 MPa pressure-resistant vessel A including a stirrer was charged with 38 parts of styrene, 60 parts of 1,3-butadiene, 2 parts of methacrylic acid, 4 parts of sodium lauryl sulfate as an emulsifier, 270 parts of deionized water, 0.15 parts of tert-dodecyl mercaptan as a chain transfer agent, 0.15 parts of sodium bicarbonate, and 0.3 parts of potassium persulfate as a polymerization initiator. These materials were thoroughly stirred and were then heated to 60°C so as to initiate polymerization and obtain seed particles (particulate diene polymer).

In addition, a 5 MPa pressure-resistant vessel B including a stirrer was charged with 6 parts of the seed particles described above, 82 parts of deionized water, and 0.2 parts of sodium lauryl sulfate as an emulsifier. These materials were heated to 75°C, and then 18 parts of deionized water and 1.8 parts of itaconic acid were added. Furthermore, a mixture of 44 parts of deionized water, 62 parts of styrene, 33.2 parts of 1,3-butadiene, 2 parts of itaconic acid, 0.2 parts of sodium lauryl sulfate as an emulsifier, and 0.4 parts of sodium bicarbonate in a separate vessel C was continuously added into the pressure-resistant vessel B while simultaneously adding 0.5 parts of potassium persulfate as a polymerization initiator into the pressure-resistant vessel B so as to initiate a second stage of polymerization.

Once the second stage of polymerization had started, 0.3 parts of tert-dodecyl mercaptan as a chain transfer agent was added into the vessel C. Moreover, a total of 0.5 parts of potassium persulfate as a polymerization initiator was continuously added into the pressure-resistant vessel B from after the start of polymerization. In addition, a total of 1.0 parts of 2-hydroxyethyl acrylate was continuously added into the pressure-resistant vessel B from 30 minutes prior to completion of addition of the mixture in the vessel C, up until completion of addition of the mixture. The pressure-resistant vessel B was subsequently heated to 90°C, and once the reaction rate of monomer reached at least 96%, nitrous acid was added to end the reaction.

The resultant water dispersion containing a diene polymer was adjusted to pH 8 through addition of 5% sodium hydroxide aqueous solution. Thereafter, unreacted monomer was removed by thermal-vacuum distillation. In addition, cooling was subsequently performed to 30°C or lower.

Subsequent operations were performed in the same way as in Example 1 to obtain a binder composition and a binder product. Note that the amount of emulsifier contained in the binder composition was 0.44 parts (total of sodium lauryl sulfate imported in seed particles and sodium lauryl sulfate used in second stage of polymerization) per 100 parts of the binder.

### (Comparative Examples 1 and 2)

A container, a binder composition, a binder product, a slurry composition for a negative electrode, and a negative electrode were prepared and various evaluations were performed in the same way as in Example 1 with the exception that in production of the binder composition, the amount of the mineral oil-based defoamer used as a defoamer was changed to 0.01 parts (Comparative Example 1) or 0.4 parts (Comparative Example 2). The results are shown in Table 1.

### (Comparative Example 3)

A binder composition and a binder product were prepared as described below. With the exception of this, a container, a slurry composition for a negative electrode, and a negative electrode were prepared and various evaluations were performed in the same way as in Example 1. The results are shown in Table 1.

### <Preparation of binder composition and binder product>

Seed particles (particulate diene polymer) were obtained in the same way as in Example 1.

In addition, a 5 MPa pressure-resistant vessel including a stirrer was charged with 4 parts of the seed particles described above, 45 parts of 1,3-butadiene, 14 parts of styrene, 26 parts of acrylonitrile, 12 parts of methyl methacrylate, 1 part of acrylic acid, 1 part of itaconic acid, 1 part of acrylamide, 1 part of t-dodecyl mercaptan and 0.5 parts of α-methylstyrene dimer as molecular weight modifiers, 0.1 parts of sodium dodecyl diphenyl oxide disulfonate as an emulsifier, 150 parts of deionized water, and 1.0 parts of potassium persulfate as a polymerization initiator. These materials were thoroughly stirred and were then heated to 50°C so as to initiate polymerization. Cooling was performed to quench the reaction at the point at which the polymerization conversion rate reached 96%. The resultant water dispersion containing a diene polymer was adjusted to pH 8 through addition of 5% sodium hydroxide aqueous solution. Thereafter, unreacted monomer was removed by thermal-vacuum distillation. In addition, cooling was subsequently performed to 30°C or lower.

Subsequent operations were performed in the same way as in Example 1 to obtain a binder composition and a binder product. Note that the amount of emulsifier contained in the binder composition was 0.4 parts (total of sodium dodecylbenzenesulfonate imported in seed particles and sodium dodecyl diphenyl oxide disulfonate used in second stage of polymerization) per 100 parts of the binder.

### (Comparative Example 4)

A binder composition and a binder product were prepared as described below. With the exception of this, a container, a slurry composition for a negative electrode, and a negative electrode were prepared and various evaluations were performed in the same way as in Example 1. The results are shown in Table 1.

### <Preparation of binder composition and binder product>

Seed particles (particulate diene polymer) were obtained in the same way as in Example 1.

In addition, a 5 MPa pressure-resistant vessel including a stirrer was charged with 4 parts of the seed particles described above, 45 parts of 1,3-butadiene, 14 parts of styrene, 26 parts of acrylonitrile, 12 parts of methyl methacrylate, 1 part of acrylic acid, 1 part of itaconic acid, 1 part of acrylamide, 1 part of t-dodecyl mercaptan and 0.5 parts of α-methylstyrene dimer as molecular weight modifiers, 5 parts of sodium dodecyl diphenyl oxide disulfonate and 0.9 parts of β-naphthalene sulfonic acid formaldehyde condensate sodium salt as emulsifiers, 150 parts of deionized water, and 1.0 parts of potassium persulfate as a polymerization initiator. These materials were thoroughly stirred and were then heated to 50°C so as to initiate polymerization. Cooling was performed to quench the reaction at the point at which the polymerization conversion rate reached 96%. The resultant water dispersion containing a diene polymer was adjusted to pH 8 through addition of 5% sodium hydroxide aqueous solution. Thereafter, unreacted monomer was removed by thermal-vacuum distillation. In addition, cooling was subsequently performed to 30°C or lower.

Subsequent operations were performed in the same way as in Example 1 to obtain a binder composition and a binder product. Note that the amount of emulsifier contained in the binder composition was 6 parts (total of sodium dodecylbenzenesulfonate imported in seed particles and sodium dodecyl diphenyl oxide disulfonate and β-naphthalene sulfonic acid formaldehyde condensate sodium salt used in second stage of polymerization) per 100 parts of the binder.

### (Comparative Example 5)

A binder composition, a binder product, a slurry composition for a negative electrode, and a negative electrode were prepared and various evaluations were performed in the same way as in Example 1 with the exception that a container made of polyethylene that was not subjected to hydrophobization treatment was used. The results are shown in Table 1.

In Table 1, shown below:
"Functional group" indicates amide group-containing monomer unit and hydroxyalkyl group-containing monomer unit;
"AAm" indicates acrylamide unit;
"HEA" indicates hydroxyethyl acrylate unit;
"Mineral oil" indicates mineral oil-based defoamer;
"IST" indicates isothiazoline compound (1,2-benzisothiazolin-3-one);
"SDBS" indicates sodium dodecylbenzenesulfonate;
"DSBP" indicates sodium dodecyl diphenyl oxide disulfonate;
"BETA" indicates β-naphthalene sulfonic acid formaldehyde condensate sodium salt;
"SLS" indicates sodium lauryl sulfate;
"PE" indicates polyethylene;
"Silane" indicates treatment through silane coupling agent; and
"Fluorine" indicates treatment through fluororesin.

**[Table 1]**

| | | | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|
| Binder product | Binder composition | Binder | Functional group | Type | AAm | HEA | AAm | AAm | AAm | AAm | AAm | HEA | AAm | AAm | AAm | AAm | AAm |
| | | | | Proportion [mass%] | 0.96 | 0.94 | 0.96 | 0.96 | 0.96 | 0.96 | 0.96 | 0.94 | 0.96 | 0.96 | 0.96 | 0.96 | 0.96 |
| | | | Amount [parts by mass] | | 100 | 100 | 100 | 100 | 100 | 100 | 100 | 100 | 100 | 100 | 100 | 100 | 100 |
| | | Defoamer | Type | | Mineral oil | Mineral oil | Mineral oil | Mineral oil | Mineral oil | Mineral oil | Mineral oil | Mineral oil | Mineral oil | Mineral oil | Mineral oil | Mineral oil | Mineral oil |
| | | | Amount [parts bv mass] | | 0.05 | 0.05 | 0.3 | 0.02 | 0.05 | 0.05 | 0.05 | 0.05 | 0.01 | 0.4 | 0.05 | 0.05 | 0.05 |
| | | Preservative | Type | | IST | IST | 1ST | 1ST | 1ST | 1ST | 1ST | 1ST | 1ST | 1ST | 1ST | IST | IST |
| | | | Amount [parts bv mass] | | 0.1 | 0.1 | 0.1 | 0.1 | 0.1 | 0.1 | 0.1 | 0.1 | 0.1 | 0.1 | 0.1 | 0.1 | 0.1 |
| | | Emulsifier | Type | SDBS | Yes | - | Yes | Yes | Yes | Yes | Yes | - | Yes | Yes | Yes | Yes | Yes |
| | | | | DSBP | Yes | Yes | Yes | Yes | Yes | Yes | Yes | - | Yes | Yes | Yes | Yes | Yes |
| | | | | BETA | Yes | - | Yes | Yes | - | Yes | Yes | - | Yes | Yes | - | Yes | Yes |
| | | | | SLS | - | - | - | - | - | - | - | Yes | - | - | - | - | - |
| | | | Amount [parts bv mass] | | 1.4 | 0.7 | 1.4 | 1.4 | 0.5 | 5.0 | 1.4 | 0.44 | 1.4 | 1.4 | 0.4 | 6.0 | 1.4 |
| | | Surface tension [mN/m] | | | 40 | 40 | 40 | 40 | 60 | 20 | 40 | 50 | 40 | 40 | 70 | 10 | 40 |
| | | Solid content concentration [mass%] | | | 40 | 40 | 40 | 40 | 40 | 40 | 40 | 40 | 40 | 40 | 40 | 40 | 40 |
| | Container | Material | | | PE | PE | PE | PE | PE | PE | PE | PE | PE | PE | PE | PE | PE |
| | | Hydrophobization treatment | | | Silane | Silane | Silane | Silane | Silane | Silane | Fluorine | Silane | Silane | Silane | Silane | Silane | - |
| | | Contact angle with water [°] | | | 110 | 110 | 110 | 110 | 110 | 110 | 110 | 110 | 110 | 110 | 110 | 110 | 70 |
| Inhibition of formation of aggregates | | | | | A | A | A | B | B | B | A | A | C | A | B | B | C |
| Adhesiveness | | | | | A | A | B | B | B | B | A | A | C | C | C | C | B |
| Viscosity stability (slurry) | | | | | A | A | A | B | B | A | A | B | B | A | D | A | A |
| Viscositv stability (binder) | | | | | A | A | A | A | A | A | A | A | A | A | B | A | A |

It can be seen from Table 1 that in the case of the binder products of Examples 1 to 8, aggregation has a low tendency to occur in the binder composition even after long-term storage, and a negative electrode mixed material layer having excellent adhesiveness can be formed using the binder composition after long-term storage. It can also be seen that a slurry composition for a negative electrode having excellent viscosity stability can be produced in Examples 1 to 8 even in a situation in which the binder composition is used after long-term storage. Furthermore, it can be seen that viscosity stability of the binder composition is excellent in Examples 1 to 8.

### INDUSTRIAL APPLICABILITY

The presently disclosed binder product for a secondary battery has a low tendency for aggregation to occur in a binder composition and enables formation of a functional layer having excellent adhesiveness using the binder composition even after long-term storage.

### REFERENCE SIGNS LIST

- 1: container
- 2: binder composition
- 11: cap
- 12: accommodating part
- 13: inner wall surface
- 14: internal space
- 100: binder product for secondary battery

## Claims

1. A binder product for a secondary battery comprising: a container having an accommodating part; and a binder composition accommodated in an internal space of the accommodating part, wherein
an inner wall surface of the accommodating part has a contact angle with water of 80° or more,
the binder composition contains a binder, a defoamer, and water and has a content of the defoamer of not less than 0.02 parts by mass and not more than 0.3 parts by mass per 100 parts by mass of the binder, and
the binder composition has a surface tension of not less than 20 mN/m and not more than 60 mN/m.

2. The binder product for a secondary battery according to claim 1, wherein the binder includes either or both of an amide group and a hydroxyalkyl group.

3. The binder product for a secondary battery according to claim 1, wherein the binder includes either or both of an amide group-containing monomer unit and a hydroxyalkyl group-containing monomer unit, and a total of proportional content of the amide group-containing monomer unit and proportional content of the hydroxyalkyl group-containing monomer unit in the binder is not less than 0.05 mass% and not more than 5 mass%.

4. A binder product for a secondary battery according to any one of claims 1 to 3, wherein the binder composition further contains a preservative and has a content of the preservative of not less than 0.01 parts by mass and not more than 0.5 parts by mass per 100 parts by mass of the binder.

5. The binder product for a secondary battery according to any one of claims 1 to 4, wherein, relative to internal capacity of the container, a capacity ratio of a vacant part determined by subtracting capacity occupied by the binder composition in the container from the internal capacity of the container is 10 volume% or less.

6. The binder product for a secondary battery according to any one of claims 1 to 5, wherein the binder composition has a solid content concentration of not less than 30 mass% and not more than 60 mass%.

7. The binder product for a secondary battery according to any one of claims 1 to 6, wherein the defoamer includes a mineral oil-based defoamer.
